(19) **Europäisches Patentamt / European Patent Office / Office européen des brevets**

(11) **EP 4 640 364 A1**

(12) **EUROPEAN PATENT APPLICATION**
published in accordance with Art. 153(4) EPC

(43) Date of publication:
**29.10.2025 Bulletin 2025/44**

(21) Application number: **24767227.2**

(22) Date of filing: **07.03.2024**

(51) International Patent Classification (IPC):
**B23K 35/362** *(2006.01)*   **B23K 9/18** *(2006.01)*
**B23K 35/30** *(2006.01)*   **C22C 38/00** *(2006.01)*
**C22C 38/58** *(2006.01)*   **B23K 103/04** *(2006.01)*

(52) Cooperative Patent Classification (CPC):
**B23K 9/18; B23K 35/30; B23K 35/362;**
**C22C 38/00; C22C 38/58;** B23K 2103/04

(86) International application number:
**PCT/JP2024/008877**

(87) International publication number:
**WO 2024/185861 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.03.2023 JP 2023035369**

(71) Applicant: **JFE Steel Corporation
Tokyo 100-0011 (JP)**

(72) Inventors:
- **TAKADA, Atsushi
Tokyo 100-0011 (JP)**
- **OKABE, Takatoshi
Tokyo 100-0011 (JP)**
- **KOMURA, Masaharu
Kobe-shi, Hyogo 651-8585 (JP)**

(74) Representative: **Grünecker Patent- und Rechtsanwälte
PartG mbB
Leopoldstraße 4
80802 München (DE)**

(54) **SUBMERGED ARC WELDING METHOD AND MANUFACTURING METHOD FOR WELD JOINT**

(57)   Provided is a submerged arc welding method capable of producing a welded joint that is free of welding defects and satisfies requirements for yield stress, tensile strength, and toughness, even when carrying out submerged arc welding of a 780 MPa grade steel with a heat input of 300 kJ/cm or more. In the submerged arc welding method, a welding wire to be used has a specified composition, and CeqW (Expression 1) calculated from the composition is defied to be 0.40 to 0.80. Further, a flux to be used has a specified composition, and α (Expression 2) calculated from the composition is defied to be 0.35 to 0.70.

$$CeqW = [C]_W + [Si]_W/24 + [Mn]_W/6 + [Ni]_W/40 + [Cr]_W/5 + [Mo]_W/4 \quad \dots(1)$$

$$\alpha = (0.3 - [Fe]_F/200) \times \{[Si]_F/24 + [Mn]_F/6 + [Ni]_F/40 + [Cr]_F/5 + [Mo]_F/4\} + 0.4 \times CeqW \quad (2)$$

EP 4 640 364 A1

EP 4 640 364 A1

**Description**

TECHNICAL FIELD

The present disclosure relates to a submerged arc welding method and a method of producing a welded joint, and in particular to a submerged arc welding method for welding 780 MPa grade high tensile steels used for architectural structures with a welding heat input of 300 kJ/cm or more, and a method of producing such a welded joint.

BACKGROUND

In recent years, as architectural structures have become larger and have larger spans, there has been a trend toward higher strength steel plates used in steel frames. Conventionally, the skin plates of box columns have mainly been made of steel with strength grades up to 590 MPa, but 780 MPa grade steel is now being used.

Submerged arc welding is typically used to join the skin plates of box columns, and the strength of the weld metal is required to have strength properties equivalent to that of the base metal. As a welding material for submerged arc welding capable of securing a weld metal strength of 780 MPa or more, for example, Patent Literature (PTL) 1 describes a solid wire for submerged arc welding. PTL 1 describes that the content of C, Si, Mn, Ni, Cr, Mo, P, and S in the wire are specified, and that ([Mn] + [Ni])/([Cr] + [Mo]) is adjusted to 1.4 to 4.0. This is said to enable significant improvement in low-temperature toughness and hydrogen embrittlement susceptibility of the weld metal.

Further, PTL 2 describes a submerged arc welding method for 780 MPa grade high tensile steel, and describes that a good bead shape without slag inclusion is obtainable by optimizing amounts of alloying elements in sintered flux and flux particle size. Further, by limiting the chemical composition of the solid wire to be combined, a weld metal that has a high tensile strength of 780 MPa or more and good low-temperature toughness is obtainable.

Further, PTL 3 describes a wire for double-sided, single-layer submerged arc welding. In double-sided, single-layer submerged arc welding, in which base metal dilution is large, strength and toughness of the weld metal are secured by limiting the wire composition, and further, wire feedability can be secured by limiting the tensile strength of the wire to 1200 N/mm$^2$ or less.

Further, PTL 4 describes a high-strength welded steel pipe or tube produced by submerged arc welding of one layer on each side of the inner and outer surfaces, in which the tensile strengths of the base metal and the weld metal are both 800 MPa or more, and the weld metal has excellent low-temperature cracking resistance. PTL 4 describes that by specifying a CS value calculated from the content of Mo, Ni, Mn, and C, a weld metal that has excellent low-temperature cracking resistance is obtainable.

CITATION LIST

Patent Literature

PTL 1: JP 2015-110241 A
PTL 2: JP 2015-120175 A
PTL 3: JP 2004-337863 A
PTL 4: JP 2008-240096 A

SUMMARY

(Technical Problem)

The welding heat input applied according to PTL 1 to 4 is 50 kJ/cm or less in each case. In the manufacture of box columns in which steel material of 590 MPa grade or less is used for the skin plate, submerged arc welding with a welding heat input (hereinafter also simply referred to as "heat input") exceeding 300 kJ/cm is typically used from the viewpoint of construction efficiency.

However, when the welding materials described in PTL 1 to 4 are used and a heat input of 300 kJ/cm or more is applied, there are problems such as the occurrence of welding defects, insufficient strength of the weld metal, and degradation of toughness.

It would be helpful to solve the above-mentioned problems and to provide a submerged arc welding method that is capable of producing a welded joint that is free of welding defects and satisfies requirements for yield stress, tensile strength, and toughness, even when submerged arc welding is carried out with a heat input of 300 kJ/cm or more.

The required strength of the weld metal referred to here means that room temperature yield stress (0.2 % proof stress) of the weld metal prepared in accordance with the standards of JIS Z 3111 is 630 MPa or more and the tensile strength is 780 MPa or more. Further, the required toughness of the weld metal means that absorbed energy $vE_0$ of the weld metal of a welded joint produced in accordance with the standards of JIS Z 3128 at a test temperature of 0 °C in a V-notch Charpy impact test is 27 J or more.

(Solution to Problem)

The inventors have conducted intensive studies to solve the above problems. As a result, it was found that in order to prevent the occurrence of welding defects in a submerged arc welding method with a heat input of 300 kJ/cm or more, it is effective to set CeqW of the welding wire represented by Expression (1) described below (hereinafter also simply referred to as "wire") to a value from 0.40 to 0.80.

However, when the CeqW of the welding wire is 0.80 or less, when submerged arc welding is carried out in combination with a conventional flux, the problem of insufficient strength of the weld metal cannot be solved. It was found that an effective solution to this problem is to add an element effective for improving the strength of the weld metal from the flux and adjust $\alpha$, represented by Expression (2) described below, to a value from 0.35 to 0.70.

The present disclosure is based on these findings and further investigation. Primary features of the present disclosure are as follows.

[1] A submerged arc welding method, the method comprising welding a 780 MPa grade steel with a welding heat input of 300 kJ/cm or more using a welding wire and a flux, wherein

the welding wire comprises a chemical composition containing (consisting of), in mass%,
C: 0.03 % to 0.12 %,
Si: 0.01 % to 0.60 %,
Mn: 1.0 % to 2.0 %,
P: 0.015 % or less,
S: 0.015 % or less,
Ni: 1.0 % to 4.0 %,
Cr: 1.5 % or less,
Mo: 0.2 % to 1.2 %,
O: 0.015 % or less, and
N: 0.010 % or less,
with the balance being Fe and inevitable impurity,
wherein CeqW represented by the following Expression (1) is in a range from 0.40 to 0.80,
the flux comprises a chemical composition containing, in mass%,
$SiO_2$: 5 % to 30 %,
CaO: 1 % to 10 %,
MgO: 5 % to 30 %,
$Al_2O_3$: 3 % to 20 %,
$TiO_2$: 2 % to 20 %,
$Na_2O$: 1 % to 3 %,
$CaF_2$: 2 % to 20 %,
one or more metal carbonates: 2 % to 12 % in total in $CO_2$ content equivalent,
Si: 0.10 % to 2.50 %,
Mn: 0.1 % to 2.0 %,
Ni: 1.0 % to 12.0 %,
Cr: 8.0 % or less,
Mo: 1.0 % to 8.0 %, and
Fe: 10 % to 30 %,
wherein $\alpha$ represented by the following Expression (2) is in a range from 0.35 to 0.70,

$$\text{CeqW} = [C]_W + [Si]_W/24 + [Mn]_W/6 + [Ni]_W/40 + [Cr]_W/5 + [Mo]_W/4$$
$$\ldots(1)$$

$$\alpha = (0.3 - [Fe]_F/200) \times \{[Si]_F/24 + [Mn]_F/6 + [Ni]_F/40 + [Cr]_F/5 + [Mo]_F/4\} + 0.4 \times \text{CeqW} \tag{2}$$

where [element]w of the wire in Expression (1) or [component]$_F$ of the flux in Expression (2) represents the content in mass% of the element or component, and is set to 0 when the element or component is not contained.

[2] The submerged arc welding method according to [1], above, wherein the chemical composition of the welding wire further comprises, in mass%, at least one selected from the group consisting of:

Cu: 1.0 % or less,
Al: 0.20 % or less,
Ti: 0.20 % or less,
Nb: 0.10 % or less,
V: 0.10 % or less,
Ca: 0.010 % or less,
B: 0.010 % or less, and
REM: 0.020 % or less.

[3] The submerged arc welding method according to [1] or [2], above, wherein the chemical composition of the flux further comprises, in mass%, at least one selected from the group consisting of:

$B_2O_3$: 1.0 % or less,
$K_2O$: 3.0 % or less,
Ti: 1.00 % or less, and
Al: 1.00 % or less.

[4] A method of producing a welded joint, the method comprising producing a welded joint using the submerged arc welding method according to any one of [1] to [3], above.
[5] The method of producing a welded joint according to [4], above, wherein the welded joint comprises a weld metal comprising a chemical composition containing (consisting of), in mass%,

C: 0.04 % to 0.10 %,
Si: 0.10 % to 0.80 %,
Mn: 0.9 % to 2.0 %,
P: 0.015 % or less,
S: 0.015 % or less,
Ni: 1.6 % to 5.0 %,
Cr: 0.3 % to 2.0 %,
Mo: 0.5 % to 2.0 %,
O: 0.040 % or less, and
N: 0.010 % or less,
with the balance being Fe and inevitable impurity,
wherein CeqD represented by the following Expression (3) is 0.75 to 0.95,

$$CeqD = [C]_D + [Si]_D/24 + [Mn]_D/6 + [Ni]_D/40 + [Cr]_D/5 + [Mo]_D/4 \quad \ldots(3)$$

where [element]$_D$ of the weld metal in Expression (3) represents the content in mass% of the element, and is set to 0 when the element is not contained.

[6] The method of producing a welded joint according to [5], above, wherein the weld metal of the welded joint further comprises, in mass%, at least one selected from the group consisting of:

Cu: 1.0 % or less,
Al: 0.12 % or less,
Ti: 0.12 % or less,
Nb: 0.10 % or less,
V: 0.10 % or less,
Ca: 0.006 % or less, and

REM: 0.020 % or less.

[7] The method of producing a welded joint according to [5] or [6], above, wherein the weld metal of the welded joint has mechanical properties of a room temperature yield stress, 0.2 % proof stress, of 630 MPa or more, a tensile strength of 780 MPa or more, and an absorbed energy $vE_0$ of 27 J or more in a V-notch Charpy impact test at a test temperature of 0 °C.

(Advantageous Effect)

According to the present disclosure, in a high heat input submerged arc welding method for welding 780 MPa grade steel material with a welding heat input of 300 kJ/cm or more, a weld metal having a 0.2 % proof stress of 630 MPa or more and a tensile strength of 780 MPa or more is obtainable without generating welding defects. Further, the weld metal can secure an absorbed energy $vE_0$ of 27 J or more in a V-notch Charpy impact test at 0 °C, which is particularly advantageous in industrial terms.

DETAILED DESCRIPTION

An embodiment of the present disclosure is specifically described below.

The present disclosure relates to a submerged arc welding method using specific welding materials (welding wire and flux) for 780 MPa grade steel s. First, submerged arc welding is described.

[Submerged arc welding]

Submerged arc welding is a welding method in which an electrode wire is continuously fed into granular/powdered flux that has been spread on the base metal in advance, and an arc is generated between the tip of the electrode wire and the base metal to continuously weld the base metal. Submerged arc welding has an advantage that it can be carried out efficiently by applying a large current to increase the deposition rate of the electrode wire.

Examples of electrode wire include a solid wire or a flux-cored wire containing flux for wire inside the wire, but according to the present disclosure, welding is carried out using a solid wire having the chemical composition described below.

As an example of large heat input submerged arc welding according to the present disclosure, two steel materials are butted together to form a 35 ° V groove, flux is distributed using a prepared solid wire (diameter 6.4 mm), and then welding is carried out in a flat position using leading and trailing electrodes under the following conditions. Current: 1400 A to 2200 A (AC), voltage: 36 V to 50 V, welding speed: 16 cm/min to 30 cm/min, welding heat input: 300 kJ/cm to 700 kJ/cm.

Further, groove machining is carried out so that the steel plates to be welded together form a defined groove shape. The groove shape to be formed does not need to be particularly limited, and examples include ordinary V-grooves, L-grooves, X-grooves, K-grooves, and the like used for welded steel structures. Further, in the case of a typical V-groove, the groove angle is preferably 20° to 45°.

Further, the submerged arc welding of the present disclosure is intended for large-heat input welding carried out in one pass, but in the case of steel material that has a large plate thickness (for example, 65 mm or more), multi-layer welding of two or more passes may be carried out.

Preheating is not always necessary, but when air temperature is below 5 °C or when there is a risk of condensation on the groove face, preheating to 150 °C or less may be carried out in order to decrease acid hydrogen in the weld metal. On the other hand, preheating to a temperature exceeding 150 °C requires a great deal of work for the preheating operation, so the preheating temperature is limited to 150 °C or less.

When carrying out two-pass welding on plate thicknesses of 65 mm or more, when interpass temperature exceeds 300 °C, the cooling rate of the weld metal decreases, resulting in a decrease in strength and toughness. Therefore, the interpass temperature is preferably 300 °C or less.

Under the above submerged arc welding conditions, 780 MPa grade steel as the base metal can be butted together, and a welded joint can be produced using the welding wire and flux described below.

[Basic composition of welding wire]

In order to secure the strength of the weld metal in 780 MPa grade submerged arc welding, it is effective to add elements from the welding wire that contribute to improving strength, such as C, Si, Mn, Ni, Cr, and Mo, and the chemical composition of the welding wire is set so that CeqW, represented by Expression (1) and described later, is 0.40 or more. However, when CeqW exceeds 0.80, the wire becomes too hard, which degrades wire feedability and leads to welding defects, and therefore CeqW is 0.80 or less.

The basic composition of the welding wire suitable for 780 MPa grade submerged arc welding, which is a feature of the present disclosure, is described below. Hereinafter, "%" in a composition means "mass%".

[C: 0.03 % to 0.12 %]

C is an element that improves strength of the weld metal, and has a large effect. When C content in the wire is less than 0.03 %, the strength of the weld metal is insufficient. On the other hand, when the content exceeds 0.12 %, a hard second phase is formed in the weld metal, and toughness is degraded. C is therefore limited to the range from 0.03 % to 0.12 %. The C content is preferably 0.04 % or more. The C content is preferably 0.10 % or less. The C content is more preferably 0.05 % or more. The C content is more preferably 0.09 % or less.

[Si: 0.01 % to 0.60 %]

Si acts as a deoxidizing element in the weld metal and decreases the amount of dissolved oxygen, thereby contributing to improving the toughness of the weld metal. It also has the effect of increasing strength by lowering the transformation temperature. Si is therefore limited to 0.01 % or more. On the other hand, when Si exceeds 0.60 %, the formation of a hard second phase in the weld metal is promoted, resulting in degradation in toughness. Si content is therefore limited to the range from 0.01 % to 0.60 %. The Si content is preferably 0.02 % or more. The Si content is preferably 0.50 % or less. The Si content is more preferably 0.04 % or more. The Si content is more preferably 0.40 % or less.

[Mn: 1.0 % to 2.0 %]

Mn is an element that enhances hardenability, and Mn content of 1.0 % or more is required to secure the strength of the weld metal. On the other hand, it is an element that is prone to solidification segregation, and therefore when content exceeds 2.0 %, hot cracking is induced due to solidification segregation. The Mn content is therefore limited to 1.0 % to 2.0 %. The Mn content is preferably 1.2 % or more. The Mn content is preferably 1.9 % or less. The Mn content is more preferably 1.4 % or more. The Mn content is more preferably 1.8 % or less.

[P: 0.015 % or less]

P is an element that segregates at crystal grain boundaries in the weld metal and induces hot cracking, and it is preferable to decrease P content as much as possible, but 0.015 % or less is permissible. The P content is therefore limited to 0.015 % or less. However, an excessive decrease in P content leads to an increase in refining costs, and therefore the P content is preferably adjusted to 0.003 % or more. The P content is more preferably 0.005 % or more. The P content is more preferably 0.012 % or less.

[S: 0.015 % or less]

S is an element that segregates at crystal grain boundaries in the weld metal and induces hot cracking, and it is preferable to decrease S content as much as possible, but 0.015 % or less is permissible. The S content is therefore limited to 0.015 % or less. However, an excessive decrease in S content leads to an increase in refining costs, and therefore the S content is preferably adjusted to 0.002 % or more. The S content is more preferably 0.003 % or more. The S content is more preferably 0.010 % or less.

[Ni: 1.0 % to 4.0 %]

Ni is an effective element for increasing the strength of the weld metal without decreasing the toughness, and therefore Ni content is 1.0 % or more. On the other hand, Ni is an austenite-stabilizing element. When the Ni content exceeds 4.0 %, solidification primary crystals become an austenite phase, which increases solidification segregation and induces hot cracking. The Ni content is therefore limited to 1.0 % to 4.0 %. The Ni content is preferably 1.2 % or more. The Ni content is preferably 3.6 % or less. The Ni content is more preferably 1.5 % or more. The Ni content is more preferably 3.2 % or less.

[Cr: 1.5 % or less]

Cr is an element effective for improving strength. However, when Cr content exceeds 1.5 %, the strength of the wire becomes too high, and the wire feedability during welding degrades. The Cr content is therefore limited to 1.5 % or less. Further, the effect of improving strength becomes remarkable at a content of 0.1 % or more, so when contained, the Cr content is preferably 0.1 % or more. The Cr content is more preferably 0.3 % or more. The Cr content is more preferably 1.3 % or less.

[Mo: 0.2 % to 1.2 %]

Mo is an element effective for improving strength, and Mo content is preferably 0.2 % or more. On the other hand, when the Mo content exceeds 1.2 %, the strength of the wire becomes too high, and the wire feedability during welding degrades. Mo is therefore limited to the range from 0.2 % to 1.2 %. The Mo content is preferably 0.3 % or more. The Mo content is preferably 1.0 % or less. The Mo content is more preferably 0.4 % or more. The Mo content is more preferably 0.9 % or less.

[O: 0.015 % or less]

Oxygen (O) is an inevitable impurity that forms oxides and degrades wire drawability. For this reason, O content is preferably decreased as much as possible, but an O content of 0.015 % or less is permissible, and therefore the O content is limited to 0.015 % or less. The O content is preferably 0.010 % or less. The O content is more preferably 0.001 % or more. The O content is more preferably 0.008 % or less.

[N: 0.010 % or less]

N (nitrogen) is an inevitable impurity that degrades the toughness of the weld metal, and therefore N content is preferably decreased as much as possible. However, a N content of 0.010 % or less is permissible, and therefore the N content is limited to 0.010 % or less. The N content is preferably 0.009 % or less. The N content is more preferably 0.002 % or more. The N content is more preferably 0.008 % or less.

[Optional elements of welding wire]

The chemical composition described above is the basic composition of the welding wire of the present disclosure, and in addition to this basic composition, the welding wire may further contain the following optional elements as required. One or more selected from the group consisting of Cu: 1.0 % or less, Al: 0.20 % or less, Ti: 0.20 % or less, Nb: 0.10 % or less, V: 0.10 % or less, Ca: 0.010 % or less, B: 0.010 % or less, and REM: 0.020 % or less. Each is explained individually below.

[Cu: 1.0 % or less]

Cu is an element that finely precipitates in the weld metal and improves strength through strengthening by precipitation. However, when content exceeds 1.0 %, red shortness is observed in a temperature range of about 1100 °C, inducing bead surface cracks, and therefore the content is preferably in the range of 1.0 % or less. Such a strength improving effect becomes remarkable at a content of 0.1 % or more, and therefore the content is preferably 0.1 % or more. The Cu content is even more preferably 0.2 % or more. The Cu content is even more preferably 0.8 % or less.

[Al: 0.20 % or less]

Al acts as a deoxidizing element in the weld metal and decreases the amount of dissolved oxygen, thereby decreasing oxide quantity and contributing to increasing the toughness of the weld metal. However, when the content exceeds 0.20 %, coarse $Al_2O_3$ particles are formed in the weld metal, which become the initiation points of fractures. Therefore, the range is preferably 0.20 % or less. In order to obtain such a toughening effect, the Al content is more preferably 0.01 % or more. The Al content is even more preferably 0.03 % or more. The Al content is even more preferably 0.16 % or less.

[Ti: 0.20 % or less]

Ti acts as a deoxidizing element in the weld metal and decreases the amount of dissolved oxygen. Further, by decreasing the interfacial energy between oxides and the molten steel, Ti causes oxides to be finely dispersed and contributes to improving the toughness of the weld metal. However, when the Ti content exceeds 0.20 %, ductility decreases and toughness decreases due to the increase in the amount of solute Ti in the weld metal. Therefore, the range is preferably 0.20 % or less. In order to obtain such an effect of improving toughness, the Ti content is more preferably 0.01 % or more. The Ti content is even more preferably 0.03 % or more. The Ti content is even more preferably 0.15 % or less.

[Nb: 0.10 % or less]

Nb is an element that enhances hardenability and contributes to improving the strength of the weld metal. However, when content exceeds 0.10 %, the strength of the wire becomes too high, and the wire feedability during welding degrades. The Nb content is therefore preferably set to the range of 0.10 % or less. In order to obtain such a strength improving effect, the Nb content is more preferably 0.01 % or more. The Nb content is even more preferably 0.02 % or more. The Nb content is even more preferably 0.08 % or less.

[V: 0.10 % or less]

V is a carbide-forming element and contributes to improving the strength of the weld metal by precipitating fine carbides in the weld metal. However, when content exceeds 0.10 %, the strength of the wire becomes too high, and the wire feedability during welding degrades. The V content is therefore preferably set to the range of 0.10 % or less. In order to obtain such a strength improving effect, the V content is more preferably 0.01 % or more. The V content is even more preferably 0.02 % or more. The V content is even more preferably 0.08 % or less.

[Ca: 0.010 % or less]

Ca combines with S to form sulfide (CaS), thereby suppressing hot cracking. However, when content exceeds 0.010 %, Ca segregates at prior austenite grain boundaries and embrittles grain boundaries, resulting in a decrease in wire drawability. Therefore, when Ca is contained, the content is preferably in the range of 0.010 % or less. In order to obtain such an effect of suppressing hot cracking, the Ca content is more preferably 0.001 % or more. The Ca content is even more preferably 0.002 % or more. The Ca content is even more preferably 0.008 % or less.

[B: 0.010 % or less]

B is an element that enhances hardenability and contributes to improving the strength of the weld metal. However, when the content exceeds 0.010 %, hot cracking is induced. Therefore, when B is contained, the content is preferably in the range of 0.010 % or less. In order to obtain such a strength improving effect, the B content is more preferably 0.001 % or more. The B content is even more preferably 0.002 % or more. The B content is even more preferably 0.008 % or less.

[REM: 0.020 % or less]

REM (rare earth metals) combine with S in molten metal to form sulfides with high melting points, thereby suppressing the formation of sulfides with low melting points and contributing to the suppression of hot cracking. However, when the content exceeds 0.020 %, REM segregates at prior austenite grain boundaries and acts to embrittle grain boundaries, thereby degrading wire drawability. Therefore, when a REM is contained, the content is preferably in the range of 0.020 % or less. In order to obtain such an effect of suppressing hot cracking, the REM content is more preferably 0.002 % or more. The REM content is even more preferably 0.003 % or more. The REM content is even more preferably 0.015 % or less.

[Balance of welding wire]

The balance, other than the components described above, consists of Fe and inevitable impurity. Examples of inevitable impurity include Sn, Sb, As, Pb, and Bi. The Sn, Sb, and As content in the wire are each preferably 0.005 % or less, and the Pb and Bi content are each preferably 0.0001 % or less. Further, so long as the composition described above is satisfied, the inclusion of other inevitable impurity elements is not precluded, and such embodiments are also included within the technical scope of the present disclosure.

[CeqW of welding wire]

As described above, in a submerged arc welding method with a heat input of 300 kJ/cm or more, in order to prevent the occurrence of welding defects, it is effective to adjust the CeqW of the welding wire represented by the following Expression (1) to a value from 0.40 to 0.80.

$$CeqW = [C]_W + [Si]_W/24 + [Mn]_W/6 + [Ni]_W/40 + [Cr]_W/5 + [Mo]_W/4$$
$$...(1)$$

Here, the [element]w of the wire in Expression (1) represents the content in mass% of the element, and is set to 0 when the element is not contained.

CeqW of the wire is 0.40 or more to add elements from the wire that improve strength. On the other hand, when CeqW exceeds 0.80, the wire becomes too hard, which degrades the wire feedability and makes the wire feed unstable. This causes wire feeding to stop, which stops welding, or wire curling cannot be completely corrected, causing the wire to miss the intended position and leaving a portion of the groove unmelted, that is, causing a welding defect.

[Method of producing wire]

Next, a method of producing the welding wire (solid wire) according to the present disclosure is described. The welding wire according to the present disclosure may be produced by any conventional method of producing a welding wire.

For example, the solid wire according to the present disclosure is produced by a casting process in which molten steel having the composition described above is melted in a normal smelting furnace such as an electric furnace or a vacuum melting furnace, and cast into a mold or the like having a defined shape. Next, the obtained steel ingot is subjected to a heating process in which it is heated to a defined temperature, and a hot rolling process in which the heated steel ingot is hot rolled to form a steel material of a defined shape (rod). Further, it is preferable to carry out a cold working process in which the obtained steel material (rod) is subjected to a plurality of cold working passes (cold wire drawing) and, as required, an annealing process at an annealing temperature of 500 °C to 900 °C to form a wire of the desired dimensions.

[Flux basic composition]

The inventors conducted research into a flux suitable for the welding wire having the composition described above. As a result, it was found that, as described above, the problem of insufficient strength of the weld metal can be effectively addressed by adding, from the flux, an element that is effective in improving the strength of the weld metal and adjusting $\alpha$ to 0.35 to 0.70, which is expressed by Expression (2) described below. The basic composition of the flux (compound composition + metal composition) is described below. Hereinafter, "%" in a composition means "mass%".

[Compounds in basic composition of flux]

[$SiO_2$: 5 % to 30 %]

$SiO_2$ is an important component for forming a good weld bead, and when $SiO_2$ content is less than 5 %, conformity of the bead toe becomes poor and undercut occurs. On the other hand, when exceeding 30 %, oxygen content in the weld metal increases, degrading the toughness. The $SiO_2$ content is therefore limited to 5 % to 30 %. The $SiO_2$ content is preferably 8 % or more. The $SiO_2$ content is preferably 25 % or less.

[CaO: 1 % to 10 %]

CaO has an effect of adjusting the melting point and flowability of slag. When the content is less than 1 %, the bead toe does not conform well and undercut occurs. On the other hand, when exceeding 10 %, the flowability becomes poor, bead height becomes non-uniform, bead appearance degrades, and slag separability also degrades. The CaO content is therefore limited to 1 % to 10 %. The CaO content is preferably 2 % or more. The CaO content is preferably 8 % or less.

[MgO: 5 % to 30 %]

MgO has an effect of increasing the basicity of the slag and decreasing oxygen content in the weld metal. When the content is less than 5 %, the oxygen content in the weld metal increases, resulting in a degradation in toughness. On the other hand, when exceeding 30 %, the softening point of the flux becomes high, the bead height becomes non-uniform, the bead appearance degrades, and the slag separability also degrades. The MgO content is therefore limited to 5 % to 30 %. The MgO content is preferably 8 % or more. The MgO content is preferably 25 % or less.

[$Al_2O_3$: 3 % to 20 %]

$Al_2O_3$ is a component required for obtaining good slag separability and bead appearance, and also has an effect of improving arc stability. To obtain these effects, the content needs to be 3 % or more. On the other hand, when exceeding 20 %, viscosity of the flux increases, resulting in a convex bead and poor slag separability. The content of $Al_2O_3$ is therefore limited to 3 % to 20 %. The $Al_2O_3$ content is preferably 5 % or more. The $Al_2O_3$ content is preferably 18 % or less.

[$TiO_2$: 2 % to 20 %]

$TiO_2$ is a component that contributes to the separability and low-temperature toughness of the molten slag, and also has an effect of improving the weld bead shape. To obtain these effects, the content needs to be 2 % or more. On the other hand, when the content is 20 % or more, the melting point of the molten slag increases too much, and the slag separability degrades. The $TiO_2$ content is therefore limited to 2 % to 20 %. The $TiO_2$ content is preferably 3 % or more. The $TiO_2$ content is preferably 18 % or less.

[$Na_2O$: 1 % to 3 %]

$Na_2O$ is a component that stabilizes the arc during welding, and in order to obtain such an effect, content needs to be 1 % or more. On the other hand, when the content is 3 % or more, moisture absorption resistance degrades and diffusible hydrogen content in the weld metal increases, inducing low-temperature cracking. The $Na_2O$ content is therefore limited to 1 % to 3 %. The $Na_2O$ content is preferably 1.3 % or more. The $Na_2O$ content is preferably 2 % or less.

[$CaF_2$: 2 % to 20 %]

$CaF_2$ has an effect of lowering the melting point and viscosity of molten slag, and is an effective component for maintaining a smooth bead under welding conditions with large heat input. Further, the amount of O (oxygen) in the weld metal is decreased, improving toughness. To obtain these effects, content needs to be 2 % or more. On the other hand, when the $CaF_2$ content exceeds 20 %, the viscosity of the molten slag becomes too low, which induces undercutting and degrades the slag separability. The $CaF_2$ content is therefore limited to 2 % to 20 %. The $CaF_2$ content is preferably 4 % or more. The $CaF_2$ content is preferably 18 % or less.

[One or more metal carbonates: 2 % to 12 % in total in $CO_2$ content equivalent]

$CO_2$ generated during welding from metal carbonates such as calcium carbonate ($CaCO_3$) and magnesium carbonate ($MgCO_3$) has an effect of insulating the weld metal from air and stabilizing the arc. To obtain these effects, the content needs to be 2 % or more. On the other hand, when exceeding 12 %, the amount of gas becomes excessive, causing gas eruption and degrading welding workability. The content of the one or more metal carbonates is therefore limited to a total of 2 % to 12 %, calculated as the $CO_2$ content. The content is preferably 3 % or more. The content is preferably 10 % or less.

Aside from the above, other examples of metal carbonate include potassium carbonate ($K_2CO_3$), sodium carbonate ($Na_2CO_3$), barium carbonate ($BaCO_3$), and lithium carbonate ($Li_2CO_3$).

[Metal composition in basic composition of flux]

[Si: 0.10 % to 2.50 %]

Silicon is added as metal Si, an Fe-Si alloy, or the like, and acts as a deoxidizing material to decrease the amount of oxygen in the weld metal. It also has an effect of improving the hardenability of the weld metal. To obtain these effects, the content needs to be 0.10 % or more. On the other hand, when Si content exceeds 2.50 %, the strength of the weld metal becomes excessive and the toughness degrades. The Si content is therefore limited to 0.10 % to 2.50 %. The Si content is preferably 0.30 % or more. The Si content is preferably 2.00 % or less.

[Mn: 0.1 % to 2.0 %]

Mn is added as metal Mn, an Fe-Mn alloy, or the like, and acts as a deoxidizing material to decrease the amount of oxygen in the weld metal. It also has an effect of improving the hardenability of the weld metal. To obtain these effects, the content needs to be 0.1 % or more. On the other hand, when Mn content exceeds 2.0 %, the strength of the weld metal becomes excessive and the toughness degrades. The Mn content is therefore limited to 0.1 % to 2.0 %. The Mn content is preferably 0.2 % or more. The Mn content is preferably 1.8 % or less.

[Ni: 1.0 % to 12.0 %]

Ni is added as metal Ni, an Fe-Ni alloy, or the like, and is an important element that improves the strength and toughness of the weld metal. To obtain these effects, the content needs to be 1.0 % or more. On the other hand, when exceeding 12.0 %, solidification primary crystals become austenite phase, which increases solidification segregation and causes hot cracking. The Ni content is therefore limited to 1.0 % to 12.0 %. The Ni content is preferably 2.0 % or more. The Ni content is preferably 10.0 % or less.

[Cr: 8.0 % or less]

Cr is added as metal Cr, an Fe-Cr alloy, or the like, and is an element that improves the strength of the weld metal. However, when exceeding 8.0 %, it causes hardening of the weld metal, resulting in a decrease in toughness. The Cr content is therefore limited to 8.0 % or less. Further, the effect of improving strength becomes remarkable at a content of 0.1 % or more, and therefore the content is preferably 0.1 % to 8.0 %. The Cr content is more preferably 0.2 % or more. The Cr content is more preferably 7.5 % or less.

[Mo: 1.0 % to 8.0 %]

Mo is added as metal Mo, Fe-Mo alloy, or the like, and is an important element for improving the strength of the weld metal. To obtain this effect, the content needs to be 1.0 % or more. Further, Mo is a ferrite-stabilizing element, and therefore even when Mo is added, it has an effect of maintaining solidification primary crystals in the ferrite phase and preventing hot cracking. On the other hand, when exceeding 8.0 %, the weld metal becomes too hard, resulting in a decrease in toughness. The Mo content is therefore limited to 1.0 % to 8.0 %. The Mo content is preferably 1.5 % or more. The Mo content is preferably 7.0 % or less.

[Fe: 10 % to 30 %]

Fe is effective in improving welding efficiency and arc concentration. When Fe content is less than 10 %, the welding efficiency decreases and the arc spreads, causing molten slag to erupt. On the other hand, when the Fe content exceeds 30 %, iron particle protrusions are generated on the bead surface, degrading the appearance of the bead. The Fe content is therefore limited to 10 % to 30 %. The Fe content is preferably 12 % or more. The Fe content is preferably 25 % or less.

[Optional components of flux]

The chemical composition described above is the basic composition of the flux used according to the present disclosure. In addition to this basic composition, the flux may further contain the following optional components or elements, as required. One or more selected from the group consisting of $B_2O_3$: 1.0 % or less, $K_2O$: 3.0 % or less, Ti: 1.00 % or less, and Al: 1.00 % or less. Each is explained individually below.

[Optional components of flux]

[$B_2O_3$: 1.0 % or less]

$B_2O_3$ is a component that contributes to improving the hardenability of the weld metal, but when content exceeds 1.0 %, it forms a liquid phase that has a low melting point in the weld metal, inducing hot cracking. The content of $B_2O_3$ is therefore preferably 1.0 % or less. Further, in order to obtain the effect of improving the hardenability of the weld metal, the content is more preferably 0.1 % or more. The $B_2O_3$ content is even more preferably 0.2 % or more. The $B_2O_3$ content is even more preferably 0.8 % or less.

[$K_2O$: 3.0 % or less]

$K_2O$ is a component that stabilizes the arc during welding, but when content exceeds 3.0 %, it degrades moisture absorption resistance and increases the diffusible hydrogen content in the weld metal, inducing low-temperature cracking. The content of $K_2O$ is therefore preferably 3.0 % or less. Further, in order to obtain the stabilizing effect during welding, the content is more preferably 1.0 % or more. The $K_2O$ content is even more preferably 1.3 % or more. The $K_2O$ content is even

more preferably 2.0 % or less.

[Optional metal elements of flux]

[Ti: 1.00 % or less]

Ti is added as metal Ti, Fe-Ti, or the like, and acts as a strong deoxidizing material, decreasing the amount of oxygen in the weld metal and contributing to improving toughness. However, when the content exceeds 1.00 %, the amount of solute Ti in the weld metal increases, degrading toughness. The Ti content is therefore preferably 1.00 % or less. Further, in order to obtain the effect of improving toughness, the content is more preferably 0.10 % or more. The Ti content is even more preferably 0.20 % or more. The Ti content is even more preferably 0.90 % or less.

[Al: 1.00 % or less]

Al is added as metal Al, Fe-Al, or the like, and acts as a strong deoxidizing material, decreasing the amount of oxygen in the weld metal and contributing to improving toughness. However, when the content exceeds 1.00 %, the amount of solute Al in the weld metal increases, degrading toughness. The Al content is therefore preferably 1.00 % or less. Further, in order to obtain the effect of improving toughness, the content is more preferably 0.10 % or more. The Al content is even more preferably 0.20 % or more. The Al content is even more preferably 0.90 % or less.

[Balance of flux]

The balance of the flux other than the above is inevitable impurity such as Ba, Li, P, and S. Of these inevitable impurities, Ba and Li are each preferably limited to 3.0 % or less, and P and S, which in particular affect the welding quality, are each preferably limited to 0.1 % or less.

[$\alpha$ defined in Expression (2)]

As described above, when the CeqW of the welding wire is limited to 0.80 or less, in combination with flux according to conventional technology, there is a problem that the hardenability of the weld metal is insufficient and the weld metal strength requirements cannot be satisfied. In response to this, the inventors considered that it might be effective to add elements to the flux that are effective in improving the hardenability of the weld metal, and so produced various types of flux and conducted intensive studies. As a result, it was found that the transfer of elements from the flux to the weld metal is affected by the amount of elements that enhance hardenability added to the flux, such as Si, Mn, Ni, Cr, and Mo, as well as the amount of Fe in the flux. Further, it was found that it is possible to secure both the strength of the weld metal and cracking resistance by adjusting $\alpha$ to a value from 0.35 to 0.70, expressed by the following Expression (2), which indicates elements added to the flux and CeqW of the welding wire.

$$\alpha = (0.3 - [Fe]_F/200) \times \{[Si]_F/24 + [Mn]_F/6 + [Ni]_F/40 + [Cr]_F/5 + [Mo]_F/4\} + 0.4 \times CeqW \qquad (2)$$

Here, [component]$_F$ of the flux in Expression (2) represents the content in mass% of the component, and is set to 0 when the component is not contained. Further, [Si]$_F$ does not include the content of Si contained as $SiO_2$.

When $\alpha$ is less than 0.35, the strength of the weld metal is insufficient, and when exceeding 0.70, welding defects (cracks) may occur. $\alpha$ is therefore limited to 0.35 to 0.70. $\alpha$ is preferably 0.40 or more. $\alpha$ is preferably 0.65 or less.

[Weld metal]

When 780 MPa grade steel mentioned above is butted together and submerged arc welding is carried out using the welding wire and the flux with a heat input of 300 kJ/cm or more, the weld metal of the obtained welded joint has the following chemical composition.

As a result, it is possible to obtain the following mechanical properties of the weld metal without welding defects, namely a 0.2 % proof stress of 630 MPa or more and a tensile strength of 780 MPa or more, and it is possible to ensure that the absorbed energy $vE_0$ in a V-notch Charpy impact test at 0 °C is 27 J or more.

The basic chemical composition of the weld metal is preferably as follows: C: 0.04 % to 0.10 %, Si: 0.10 % to 0.80 %, Mn: 0.9 % to 2.0 %, P: 0.015 % or less, S: 0.015 % or less, Ni: 1.6 % to 5.0 %, Cr: 0.3 % to 2.0 %, Mo: 0.5 % to 2.0 %, O: 0.040 % or less, N: 0.010 % or less. Further, the balance consists of Fe and inevitable impurity. Hereinafter, "%" in a composition means "mass%".

Further, CeqD represented by the following Expression (3) is preferably a value from 0.75 to 0.95.

$$CeqD = [C]_D + [Si]_D/24 + [Mn]_D/6 + [Ni]_D/40 + [Cr]_D/5 + [Mo]_D/4$$
$$\dots(3)$$

Here, $[element]_D$ of the weld metal in Expression (3) represents the content in mass% of the element, and is set to 0 when the element is not contained.

In addition to the basic composition of the weld metal described above, the following optional elements may be included as required. One or more selected from the group consisting of Cu: 1.0 % or less, Al: 0.12 % or less, Ti: 0.12 % or less, Nb: 0.10 % or less, V: 0.10 % or less, Ca: 0.006 % or less, B: 0.010 % or less, and REM: 0.020 % or less. Each is explained individually below.

[Basic composition of weld metal]

[C: 0.04 % to 0.10 %]

C is an element that improves the strength of the weld metal. When C content is less than 0.04 %, the weld metal strength is insufficient. On the other hand, when the content exceeds 0.10 %, a hard second phase is formed in the weld metal, and the toughness is degraded. The C content is therefore preferably 0.04 % or more. The C content is therefore preferably 0.10 % or less. The C content is more preferably 0.05 % or more. The C content is more preferably 0.08 % or less.

[Si: 0.10 % to 0.80 %]

Si acts as a deoxidizing element in the weld metal and decreases the amount of dissolved oxygen, thereby contributing to improving the toughness of the weld metal. It also has the effect of increasing strength by lowering the transformation temperature. When the Si content is less than 0.10 %, the effects are insufficient. When the Si content exceeds 0.80 %, the formation of a hard second phase in the weld metal is promoted, degrading the toughness. The Si content is therefore preferably 0.10 % or more. The Si content is therefore preferably 0.80 % or less. The Si content is more preferably 0.20 % or more. The Si content is more preferably 0.60 % or less.

[Mn: 0.9 % to 2.0 %]

Mn is an element that enhances hardenability, and in order to secure the strength of the weld metal, Mn content is preferably 0.9 % or more. On the other hand, it is an element that is prone to solidification segregation, and therefore when content exceeds 2.0 %, hot cracking is induced due to solidification segregation. The Mn content is therefore preferably 0.9 % or more. The Mn content is therefore preferably 2.0 % or less. The Mn content is more preferably 1.2 % or more. The Mn content is more preferably 1.8 % or less.

[P: 0.015 % or less]

P is an element that segregates at crystal grain boundaries in the weld metal and induces hot cracking, and it is preferable to decrease P content as much as possible, but 0.015 % or less is permissible. The P content is therefore preferably in the range of 0.015 % or less. Excessively decreasing the P content leads to an increase in the refining cost for producing the welding wire, and therefore the P content is preferably adjusted to 0.003 % or more. The P content is more preferably 0.004 % or more. The P content is more preferably 0.012 % or less.

[S: 0.015 % or less]

S is an element that segregates at crystal grain boundaries in the weld metal and induces hot cracking, and it is preferable to decrease S content as much as possible, but 0.015 % or less is permissible. The S content is therefore preferably in the range of 0.015 % or less. Excessively decreasing the S content leads to an increase in the refining cost for producing the welding wire, and therefore the S content is preferably adjusted to 0.002 % or more. The S content is more preferably 0.003 % or more. The S content is more preferably 0.012 % or less.

[Ni: 1.6 % to 5.0 %]

Ni is an effective element for increasing the strength of the weld metal without decreasing the toughness. To obtain this effect, the Ni content is preferably 1.6 % or more. On the other hand, Ni is an austenite-stabilizing element, and when added in an amount exceeding 5.0 %, solidification primary crystals become an austenite phase, which increases solidification segregation and induces hot cracking. The Ni content is therefore preferably 1.6 % or more. The Ni content is therefore preferably 5.0 % or less. The Ni content is more preferably 2.0 % or more. The Ni content is more preferably 4.5 % or less.

[Cr: 0.3 % to 2.0 %]

Cr is an element that improves the strength of the weld metal. Such an effect become remarkable when the content is 0.3 % or more. On the other hand, when exceeding 2.0 %, it leads to hardening of the weld metal, resulting in a decrease in toughness. The Cr content is therefore preferably 0.3 % or more. The Cr content is therefore preferably 2.0 % or less. The Cr content is more preferably 0.4 % or more. The Cr content is more preferably 1.8 % or less.

[Mo: 0.5 % to 2.0 %]

Mo is an element that improves the strength of the weld metal. Such an effect become remarkable when the content is 0.5 % or more. On the other hand, when exceeding 2.0 %, it leads to hardening of the weld metal, resulting in a decrease in toughness. The Mo content is therefore preferably 0.5 % or more. The Mo content is therefore preferably 2.0 % or less. The Mo content is more preferably 0.6 % or more. The Mo content is more preferably 1.6 % or less.

[O: 0.040 % or less]

O (oxygen) is an inevitable impurity that forms oxides and decreases the toughness of the weld metal. For this reason, O content is preferably decreased as much as possible, but an O content of 0.040 % or less is permissible, and therefore the O content is preferably in the range of 0.040 % or less. The O content is more preferably 0.010 % or more. The O content is more preferably 0.036 % or less.

[N: 0.010 % or less]

N (nitrogen) is an inevitable impurity that degrades the toughness of the weld metal. Accordingly, N content is preferably decreased as much as possible, but 0.010 % or less is permissible. The N content is therefore preferably in the range of 0.010 % or less. The N content is more preferably 0.002 % or more. The N content is more preferably 0.008 % or less.

[Optional elements of weld metal]

The chemical composition described above is the basic composition of the weld metal of the present disclosure, and in addition to this basic composition, the weld metal may further contain the following optional elements as required. One or more selected from the group consisting of Cu: 1.0 % or less, Al: 0.12 % or less, Ti: 0.12 % or less, Nb: 0.10 % or less, V: 0.10 % or less, Ca: 0.006 % or less, B: 0.010 % or less, and REM: 0.020 % or less. Each is explained individually below.

[Cu: 1.0 % or less]

Cu is an element that finely precipitates in the weld metal and improves strength through strengthening by precipitation. However, when contained in excess of 1.0 %, weld defects are induced, and therefore Cu content is preferably in the range of 1.0 % or less. Further, the effect of improving the strength of the weld metal is remarkable at 0.1 % or more, and therefore the Cu content is more preferably 0.1 % to 1.0 %.

[Al: 0.12 % or less]

Al acts as a deoxidizing element in the weld metal and decreases the amount of dissolved oxygen, thereby decreasing oxide quantity and contributing to increasing the toughness of the weld metal. However, when content exceeds 0.12 %, Al forms coarse $Al_2O_3$ in the weld metal, which becomes an initiation point of fractures. The content is therefore preferably in the range of 0.12 % or less. Further, in order to obtain the effect of increasing the toughness of the weld metal, the Al content is preferably 0.01 % or more, and therefore the Al content is more preferably 0.01 % to 0.12 %.

[Ti: 0.12 % or less]

Ti acts as a deoxidizing element in the weld metal and decreases the amount of dissolved oxygen. Further, by decreasing the interfacial energy between oxides and the molten steel, Ti causes oxides to be finely dispersed and contributes to improving the toughness of the weld metal. However, when Ti content exceeds 0.12 %, ductility decreases and toughness decreases due to the increase in the amount of solute Ti in the weld metal. The content is therefore preferably in the range of 0.12 % or less. Further, in order to obtain such an effect of improving toughness, the Ti content is preferably 0.01 % or more, and therefore more preferably 0.01 % to 0.12 %.

[Nb: 0.10 % or less]

Nb is an element that enhances hardenability and contributes to improving the strength of the weld metal. However, when the content exceeds 0.10 %, this leads to hardening of the weld metal, thereby reducing the toughness. The Nb content is therefore preferably set to the range of 0.10 % or less. In order to obtain the effect of improving the strength of the weld metal, the Nb content is preferably 0.01 % or more, and therefore more preferably 0.01 % to 0.10 %.

[V: 0.10 % or less]

V is a carbide-forming element and contributes to improving the strength of the weld metal by precipitating fine carbides in the weld metal. However, when the content exceeds 0.10 %, the weld metal becomes hardened, resulting in a decrease in toughness. The V content is therefore preferably set to the range of 0.10 % or less. In order to obtain such an effect of improving the strength of the weld metal, the V content is preferably 0.01 % or more, and therefore more preferably 0.01 % to 0.10 %.

[Ca: 0.006 % or less]

Ca combines with S to form sulfide (CaS), thereby suppressing hot cracking. However, when the content exceeds 0.006 %, Ca segregates at prior austenite grain boundaries and embrittles grain boundaries, thereby decreasing the toughness of the weld metal. Therefore, when Ca is contained, the content is preferably in the range of 0.006 % or less. Further, such an effect of suppressing hot cracking becomes remarkable when the Ca content is 0.001 % or more, and therefore the Ca content is more preferably 0.001 % to 0.006 %.

[B: 0.010 % or less]

B is an element that enhances hardenability and contributes to improving the strength of the weld metal. However, when the content exceeds 0.010 %, hot cracking is induced. Therefore, when B is contained, the content is preferably in the range of 0.010 % or less. In order to obtain such a strength improving effect, the B content is preferably 0.001 % or more, and therefore more preferably 0.001 % to 0.010 %.

[REM: 0.020 % or less]

REM (rare earth metals) combine with S in molten metal to form sulfides with high melting points, thereby suppressing the formation of sulfides with low melting points and contributing to the suppression of hot cracking. However, when the content exceeds 0.020 %, REM segregate at prior austenite grain boundaries and act to embrittle grain boundaries, thereby decreasing the toughness of the weld metal. Therefore, when a REM is contained, the content is preferably in the range of 0.020 % or less. Further, such an effect of suppressing hot cracking becomes remarkable when the REM content is 0.002 % or more, and therefore the REM content is more preferably 0.002 % to 0.020 %.

[Balance of weld metal]

The composition balance, other than the components described above, consists of Fe and inevitable impurity. Examples of inevitable impurity include Sn, Sb, As, Pb, and Bi. The Sn, Sb, and As content in the weld metal are each preferably 0.005 % or less, and the Pb and Bi content are each preferably 0.0001 % or less. Further, so long as the composition described above is satisfied, the inclusion of other inevitable impurity elements is not precluded, and such embodiments are also included within the technical scope of the present disclosure.

[CeqD of weld metal]

Further, in a submerged arc welding method with a heat input of 300 kJ/cm or more, in order to prevent the occurrence of welding defects while securing the strength and toughness of the weld metal, it is effective to adjust the CeqD of the weld metal represented by the following Expression (3) to a value from 0.75 to 0.95.

$$CeqD = [C]_D + [Si]_D/24 + [Mn]_D/6 + [Ni]_D/40 + [Cr]_D/5 + [Mo]_D/4 \quad \ldots(3)$$

Here, [element]$_D$ of the weld metal in Expression (3) represents the content in mass% of the element, and is set to 0 when the element is not contained.

The reason why the CeqD of the weld metal is set to 0.75 or more is to secure the strength of the weld metal. On the other hand, when CeqD exceeds 0.95, the toughness decreases and the tendency for low-temperature cracking to occur increases.

[780 MPa grade steel]

The base metal (steel plate) of the present disclosure is 780 MPa grade steel, and has a tensile strength of 780 MPa to 930 MPa. Methods of producing 780 MPa grade steel include a method in which a steel material obtained through a conventional steelmaking process and casting process is hot rolled by adjusting the heating conditions and rolling reduction, and then cooled to obtain a steel plate (steel material). The thickness of the steel plate after rolling is, for example, 40 mm to 100 mm.

The chemical composition of the 780 MPa grade steel is, for example, as follows: C: 0.03 % to 0.15 %, Si: 0.02 % to 0.80 %, Mn: 1.0 % to 2.5 %, P: 0.015 % or less, S: 0.012 % or less, Ni: 3.0 % or less, Cr: 2.0 % or less, Mo: 1.5 % or less, N: 0.010 % or less, O: 0.010 % or less, with the balance being Fe and inevitable impurity. Further, the following optional components may be included as required.

One or more selected from the group consisting of Cu: 1.0 % or less, Al: 0.10 % or less, Ti: 0.10 % or less, Nb: 0.10 % or less, V: 0.10 % or less, Ca: 0.006 % or less, B: 0.005 % or less, and REM: 0.050 % or less.

[Basic chemical composition of steel plate]

The basic chemical composition of the 780 MPa grade steel to be welded according to the present disclosure is described below.

[C: 0.03 % to 0.15 %]

C is an element that improves the strength of the steel material. To obtain this effect, a content of 0.03 % or more is required. On the other hand, when the content exceeds 0.15 %, a hard second phase is formed in the heat-affected zone, resulting in a decrease in toughness. The C content is therefore preferably 0.03 % or more. The C content is therefore preferably 0.15 % or less. The C content is more preferably 0.04 % or more. The C content is more preferably 0.12 % or less.

[Si: 0.02 % to 0.80 %]

Silicon (Si) acts as a deoxidizer and is an element that dissolves in steel and contributes to increasing the strength of the steel material through solid solution strengthening. To obtain these effects, a content of 0.02 % or more is required. On the other hand, when the content exceeds 0.80 %, a hard second phase is formed in the heat-affected zone, resulting in a decrease in toughness. The Si content is therefore preferably 0.02 % or more. The Si content is therefore preferably 0.80 % or less. The Si content is more preferably 0.06 % or more. The Si content is more preferably 0.60 % or less.

[Mn: 1.0 % to 2.5 %]

Mn is an element that enhances hardenability and contributes to securing the strength of the steel material. To obtain these effects, a content of 1.0 % or more is required. On the other hand, Mn is an element that is prone to solidification segregation, and therefore when Mn content exceeds 2.5 %, excessive Mn segregates in the center of the plate thickness, decreasing toughness. The Mn content is therefore preferably 1.0 % or more. The Mn content is therefore preferably 2.5 % or less. The Mn content is more preferably 1.2 % or more. The Mn content is more preferably 2.0 % or less.

[P: 0.015 % or less]

P, as an impurity, is an element that segregates at grain boundaries and decreases toughness, and it is preferable to decrease P content as much as possible, but 0.015 % or less is permissible. The P content is therefore preferably in the range of 0.015 % or less. However, an excessive decrease in P content leads to an increase in refining costs, and therefore the P content is preferably adjusted to 0.003 % or more. The P content is more preferably 0.004 % or more. The P content is more preferably 0.012 % or less.

[S: 0.012 % or less]

S exists in steel as sulfide inclusions and decreases the ductility and low-temperature toughness of the steel material. Accordingly, S content is preferably decreased as much as possible, but 0.012 % or less is permissible. The S content is therefore preferably 0.012 % or less. On the other hand, in order to drastically decrease the S content to less than 0.002 %, a long refining time is required, which increases the refining cost. Accordingly, from the viewpoint of economic efficiency, the S content is more preferably in a range of 0.002 % or more. The S content is more preferably 0.002 % to 0.010 %.

[Ni: 3.0 % or less]

Ni is an element effective for improving the strength of the steel material without decreasing the toughness. In order to obtain such an effect, content is preferably 0.1 % or more. On the other hand, when the Ni content exceeds 3.0 %, cracks occur during rolling, and therefore the Ni content is preferably 3.0 % or less. The Ni content is more preferably 0.2 % or more. The Ni content is more preferably 2.5 % or less.

[Cr: 2.0 % or less]

Cr is an element that is effective in improving the strength of the steel material. In order to obtain such an effect, Cr content is preferably 0.1 % or more. On the other hand, when the content exceeds 2.0 %, crystal grain size becomes coarse and the toughness decreases. The Cr content is therefore more preferably 0.2 % or more. The Cr content is therefore more preferably 1.8 % or less.

[Mo: 1.5 % or less]

Mo is an element that contributes to improved strength of the steel material. Further, Mo suppresses the formation of coarse microstructure that forms from prior austenite grain boundaries, and contributes to improving toughness. In order to obtain such effects, Mo content is preferably 0.1 % or more. On the other hand, when the content exceeds 1.5 %, carbides are formed in the heat-affected zone, decreasing the toughness. The Mo content is therefore preferably 1.5 % or less. The Mo content is more preferably 0.2 % or more. The Mo content is more preferably 1.2 % or less.

[N: 0.010 % or less]

N is an inevitable impurity that degrades the toughness of the steel material. Accordingly, N content is preferably decreased as much as possible, but 0.010 % or less is permissible. The N content is therefore preferably in the range of 0.010 % or less. The N content is more preferably 0.002 % or more. The N content is more preferably 0.008 % or less.

[O (oxygen): 0.010 % or less]

O (oxygen) exists as oxide inclusions in steel and decreases the low-temperature toughness of the steel material. For this reason, O (oxygen) content is preferably decreased as much as possible, but 0.010 % or less is permissible. The O (oxygen) content is therefore preferably 0.010 % or less. Further, in order to drastically decrease the O (oxygen) content to less than 0.001 %, a long refining time is required, which increases the refining cost. Accordingly, from the viewpoint of economic efficiency, the O (oxygen) content is more preferably 0.001 % or more. The O content is even more preferably 0.002 % or more. The O content is even more preferably 0.008 % or less.

[Optional elements of steel plate]

The components described above are the basic composition of the steel sheet, but in addition to this basic composition, the following optional elements may be further included as required. One or more selected from the group consisting of Cu: 1.0 % or less, Al: 0.10 % or less, Ti: 0.10 % or less, Nb: 0.10 % or less, V: 0.10 % or less, Ca: 0.006 % or less, B: 0.005 % or less, and REM: 0.050 % or less.

[Cu: 1.0 % or less]

Cu is an element that contributes to increasing the strength of the steel material through strengthening by precipitation. However, when the content exceeds 1.0 %, the weldability decreases and defects are more likely to occur during steel material production. Therefore, when Cu is contained, Cu content is preferably in the range of 1.0 % or less. Further, in order to secure the strength improving effect, the Cu content is more preferably 0.1 % or more. The Cu content is even more preferably 0.2 % or more. The Cu content is even more preferably 0.8 % or less.

[Al: 0.10 % or less]

Al acts as a deoxidizer and is an element most commonly used in a molten steel deoxidation process of steel material. However, when the content exceeds 0.10 %, crystal grains become coarse and the toughness decreases. Al content is therefore preferably in the range of 0.10 % or less. Further, in order to obtain an effect of improving toughness, the Al content is more preferably 0.01 % or more. The Al content is even more preferably 0.02 % or more. The Al content is even more preferably 0.08 % or less.

[Ti: 0.10 % or less]

Ti forms TiN in steel, and TiN has an effect of suppressing austenite grain growth. To obtain this effect, a content of 0.01 % or more is required. On the other hand, when the Ti content exceeds 0.10 %, the toughness is reduced due to the presence of solute Ti, and therefore the Ti content is preferably 0.10 % or less. The Ti content is more preferably 0.01 % to 0.08 %. The Ti content is even more preferably 0.02 % or more. The Ti content is even more preferably 0.06 % or less.

[Nb: 0.10 % or less]

Nb is an element effective in improving the strength of the steel material, and in order to obtain such an effect, Nb content of 0.01 % or more is required. On the other hand, when the content exceeds 0.10 %, carbides precipitate and the toughness decreases, and therefore the content is preferably 0.10 % or less. The Nb content is more preferably 0.01 % to 0.08 %. The Nb content is even more preferably 0.02 % or more. The Nb content is even more preferably 0.05 % or less.

[V: 0.10 % or less]

V is an element that precipitates fine carbides and contributes to improving the strength of the steel material. However, when V content exceeds 0.10 %, the steel is hardened, resulting in a decrease in toughness. For this reason, when V is contained, the V content is preferably 0.10 % or less. Further, in order to obtain the effects of improving strength and toughness, the V content is more preferably 0.01 % or more. The V content is even more preferably 0.02 % or more. The V content is even more preferably 0.08 % or less.

[Ca: 0.006 % or less]

Ca is an element that precipitates spherical sulfides and contributes to preventing lamellar tearing. Further, it is an element that is effective in improving toughness. In order to obtain such an effect, the Ca content needs to be 0.001 % or more. On the other hand, when the content exceeds 0.006 %, Ca segregates at prior austenite grain boundaries, decreasing the toughness. The Ca content is therefore preferably in the range from 0.001 % to 0.006 %. The Ca content is even more preferably 0.002 % or more. The Ca content is even more preferably 0.005 % or less.

[B: 0.005 % or less]

B is an element that segregates at grain boundaries and suppresses the formation of coarse microstructure at the grain boundaries, thereby contributing to improving the toughness of the steel material. However, when B content exceeds 0.005 %, a hard martensitic microstructure is formed, resulting in a decrease in toughness. Therefore, when B is contained, the B content is preferably in the range of 0.005 % or less. Further, in order to obtain the effect of improving toughness, the B content is more preferably 0.001 % or more. The B content is even more preferably 0.002 % or more. The B content is even more preferably 0.004 % or less.

[REM: 0.050 % or less]

REM (rare earth metals) are elements that have an effect of improving the toughness of the steel material, as well as ductility and sulfide stress corrosion cracking resistance, through morphological control of inclusions. However, when the content exceeds 0.050 %, high-temperature brittleness is exhibited and cracks during hot rolling are induced. Therefore, when a REM is contained, the REM content is preferably in the range of 0.050 % or less. In order to obtain the effect of improving toughness, the REM content is more preferably 0.002 % or more. The REM content is even more preferably 0.010 % or more. The REM content is even more preferably 0.040 % or less.

[Balance]

The balance, other than the components described above, consists of Fe and inevitable impurity. Examples of inevitable impurity include Mg, Sb, and Bi, and a total content of 0.02 % or less is permissible. Further, so long as the composition described above is satisfied, the inclusion of other inevitable impurity elements is not precluded, and such embodiments are also included within the technical scope of the present disclosure.

EXAMPLES

The effects of the present disclosure are specifically described below with reference to Examples and Comparative Examples.
The steel plates prepared were 780 MPa grade steel having the thicknesses and compositions listed in Table 1, and a V-groove with a groove angle of 35° was formed.

[Table 1]

Table 1

| Steel plate No. | Thickness (mm) | Steel plate chemical composition (mass%) | | | | | | | | | | | | | | | | | |
|---|---|---|---|---|---|---|---|---|---|---|---|---|---|---|---|---|---|---|---|
| | | C | Si | Mn | P | S | Ni | Cr | Mo | O | N | Cu | Al | Ti | Nb | V | Ca | REM | B |
| I | 55 | 0.06 | 0.20 | 1.8 | 0.010 | 0.002 | 1.5 | 0.6 | 0.6 | 0.003 | 0.004 | 0.5 | 0.03 | 0.01 | 0.02 | 0.05 | Tr. | Tr. | Tr. |
| II | 55 | 0.12 | 0.06 | 2.0 | 0.012 | 0.006 | 2.0 | 0.0 | 0.7 | 0.004 | 0.003 | 0.8 | 0.02 | 0.05 | 0.05 | Tr. | Tr. | Tr. | Tr. |
| III | 55 | 0.10 | 0.40 | 1.6 | 0.010 | 0.009 | 1.0 | 1.5 | 0.2 | 0.003 | 0.006 | Tr. | 0.01 | 0.03 | 0.02 | Tr. | 0.002 | 0.020 | 0.002 |
| IV | 40 | 0.06 | 0.20 | 1.8 | 0.010 | 0.002 | 1.5 | 0.6 | 0.6 | 0.003 | 0.004 | 0.5 | 0.03 | 0.01 | 0.02 | 0.05 | Tr. | Tr. | Tr. |
| V | 45 | 0.06 | 0.20 | 1.8 | 0.010 | 0.002 | 1.5 | 0.6 | 0.6 | 0.003 | 0.004 | 0.5 | 0.03 | 0.01 | 0.02 | 0.05 | Tr. | Tr. | Tr. |
| VI | 60 | 0.06 | 0.20 | 1.8 | 0.010 | 0.002 | 1.5 | 0.6 | 0.6 | 0.003 | 0.004 | 0.5 | 0.03 | 0.01 | 0.02 | 0.05 | Tr. | Tr. | Tr. |
| VII | 60 | 0.12 | 0.24 | 1.5 | 0.008 | 0.004 | 1.0 | 0.8 | 1.0 | 0.002 | 0.003 | 0.2 | 0.02 | 0.02 | 0.01 | 0.04 | Tr. | Tr. | Tr. |

*Tr.: below the lower limit of analysis

The welding wires were prepared by melting steel having the compositions listed in Table 2 in a vacuum melting furnace and casting into 300 kg steel ingots. The obtained steel ingots were heated to 1000 °C, and then hot rolled and cold-worked to produce welding wires each having a diameter of 6.4 mm.

[Table 2]

Table 2

| Wire No. | Wire chemical composition (mass%) | | | | | | | | | | | | | | | | | | |
|---|---|---|---|---|---|---|---|---|---|---|---|---|---|---|---|---|---|---|---|
| | C | Si | Mn | P | S | Ni | Cr | Mo | O | N | Cu | Al | Ti | Nb | V | Ca | REM | B | CeqW |
| A | 0.06 | 0.05 | 1.2 | 0.010 | 0.004 | 2.5 | Tr. | 0.9 | 0.002 | 0.003 | 0.4 | Tr. | Tr. | Tr. | Tr. | Tr. | Tr. | Tr. | 0.55 |
| B | 0.12 | 0.01 | 1.0 | 0.008 | 0.002 | 1.8 | 0.4 | 0.8 | 0.003 | 0.003 | 0.2 | Tr. | Tr. | Tr. | 0.10 | Tr. | Tr. | Tr. | 0.61 |
| C | 0.03 | 0.58 | 1.8 | 0.006 | 0.003 | 1.0 | 1.5 | 0.4 | 0.003 | 0.004 | Tr. | 0.03 | 0.19 | Tr. | Tr. | Tr. | Tr. | Tr. | 0.78 |
| D | 0.03 | 0.20 | 1.0 | 0.007 | 0.004 | 4.0 | Tr. | 1.2 | 0.009 | 0.004 | Tr. | Tr. | Tr. | Tr. | Tr. | Tr. | Tr. | Tr. | 0.61 |
| E | 0.04 | 0.10 | 1.0 | 0.007 | 0.003 | 1.2 | 0.2 | 0.5 | 0.004 | 0.005 | Tr. | Tr. | Tr. | Tr. | Tr. | Tr. | Tr. | Tr. | 0.41 |
| F | 0.06 | 0.05 | 1.8 | 0.010 | 0.004 | 2.5 | Tr. | 0.9 | 0.014 | 0.003 | 0.4 | Tr. | Tr. | 0.10 | 0.05 | Tr. | Tr. | Tr. | 0.65 |
| G | 0.06 | 0.05 | 1.2 | 0.010 | 0.004 | 3.8 | 0.6 | 1.2 | 0.002 | 0.004 | 1.0 | Tr. | Tr. | Tr. | Tr. | 0.009 | 0.018 | Tr. | 0.78 |
| H | 0.03 | 0.50 | 1.0 | 0.006 | 0.013 | 2.8 | 1.4 | 0.2 | 0.005 | 0.004 | Tr. | 0.18 | 0.05 | Tr. | Tr. | Tr. | Tr. | 0.010 | 0.62 |
| I | 0.06 | 0.05 | 1.5 | 0.014 | 0.004 | 1.2 | Tr. | 0.9 | 0.003 | 0.003 | 0.4 | Tr. | Tr. | Tr. | Tr. | Tr. | Tr. | Tr. | 0.57 |
| J | 0.12 | 0.05 | 1.2 | 0.012 | 0.013 | 2.5 | Tr. | 0.3 | 0.004 | 0.009 | 0.4 | Tr. | Tr. | Tr. | Tr. | Tr. | 0.020 | Tr. | 0.46 |
| **K** | 0.12 | 0.50 | 1.9 | 0.007 | 0.003 | 3.8 | 0.7 | 1.0 | 0.004 | 0.004 | Tr. | Tr. | Tr. | Tr. | Tr. | Tr. | Tr. | Tr. | **0.94** |
| **L** | 0.08 | 0.20 | 1.4 | 0.007 | 0.003 | 2.5 | Tr. | **1.3** | 0.004 | 0.004 | 0.6 | Tr. | Tr. | Tr. | Tr. | Tr. | Tr. | Tr. | 0.71 |
| **M** | 0.10 | 0.50 | 1.7 | 0.007 | 0.003 | 2.0 | 0.7 | 1.1 | 0.004 | 0.004 | 0.6 | Tr. | Tr. | Tr. | Tr. | Tr. | Tr. | Tr. | **0.87** |
| N | 0.06 | 0.05 | 1.2 | 0.010 | 0.004 | 1.2 | Tr. | 0.9 | 0.002 | 0.003 | 0.4 | Tr. | Tr. | Tr. | Tr. | Tr. | Tr. | Tr. | 0.52 |
| *Tr.: below the lower limit of analysis | | | | | | | | | | | | | | | | | | |

The fluxes were prepared by blending precursor powders so as to obtain the compositions listed in Table 3 (the metal carbonate content is indicated as $CO_2$ content), kneading with a binder (water glass), granulating, and sintering at 500 °C. The granulated fluxes were subjected to particle size regulation processing, such as dust removal and coarse particle crushing, to adjust the particle size of all particles to be 2.5 mm or less.

[Table 3]

Table 3

| Flux No. | SiO$_2$ | CaO | MgO | Al$_2$O$_3$ | TiO$_2$ | Na$_2$O | CaF$_2$ | CO$_2$ | Si | Mn | Ni | Cr | Mo | Fe | B$_2$O$_3$ | K$_2$O | Al | Ti |
|---|---|---|---|---|---|---|---|---|---|---|---|---|---|---|---|---|---|---|
| a | 12 | 9 | 13 | 10 | 8 | 1 | 6 | 5 | 1.20 | 0.8 | 8.0 | Tr. | 4.0 | 20 | Tr. | Tr. | Tr. | Tr. |
| b | 12 | 6 | 10 | 8 | 7 | 3 | 8 | 7 | 2.40 | 0.1 | 6.0 | 0.8 | 2.2 | 23 | Tr. | Tr. | 0.20 | 0.90 |
| c | 10 | 3 | 5 | 6 | 15 | 1 | 17 | 12 | 0.20 | 0.6 | 3.5 | 4.0 | 1.0 | 18 | Tr. | Tr. | 0.90 | Tr. |
| d | 12 | 4 | 15 | 10 | 10 | 1 | 18 | 11 | 0.10 | 2.0 | 1.0 | 1.6 | 1.0 | 10 | Tr. | Tr. | 0.60 | 0.50 |
| e | 13 | 6 | 7 | 6 | 2 | 3 | 2 | 4 | 1.00 | 0.5 | 12.0 | 2.2 | 8.0 | 30 | 1.0 | Tr. | 0.30 | 0.40 |
| f | 30 | 2 | 13 | 3 | 2 | 1 | 5 | 2 | 0.50 | 0.4 | 1.0 | 8.0 | 1.0 | 28 | Tr. | 1.0 | Tr. | Tr. |
| g | 5 | 5 | 8 | 20 | 6 | 2 | 4 | 6 | 0.80 | 0.1 | 12.0 | Tr. | 3.5 | 25 | Tr. | Tr. | Tr. | Tr. |
| h | 12 | 1 | 30 | 8 | 2 | 1 | 2 | 6 | 0.50 | 0.2 | 5.0 | 3.4 | 2.2 | 24 | Tr. | 3.0 | 0.20 | 0.50 |
| i | 10 | 3 | 6 | 7 | 20 | 1 | 10 | 12 | 0.40 | 0.6 | 3.5 | 4.0 | 1.0 | 18 | Tr. | 1.0 | 0.80 | Tr. |
| j | 12 | 4 | 15 | 10 | 10 | 1 | 18 | 11 | 0.10 | 2.0 | 1.0 | 1.6 | 1.0 | 10 | Tr. | Tr. | Tr. | 0.40 |
| k | 13 | 6 | 12 | 12 | 5 | 3 | 2 | 4 | 1.00 | 0.3 | 5.0 | 1.0 | 2.0 | 30 | Tr. | Tr. | 0.30 | 0.30 |
| l | 15 | 6 | 7 | 6 | 2 | 3 | 14 | 4 | 1.00 | 0.5 | 10.0 | 2.0 | 6.0 | 20 | 1.0 | Tr. | 0.30 | 0.40 |
| m | 13 | 6 | 14 | 10 | 5 | 3 | 2 | 4 | 1.00 | 0.3 | 5.0 | 1.0 | 2.0 | 30 | Tr. | Tr. | 0.30 | 0.30 |
| **n** | 9 | 3 | 6 | 7 | 20 | 1 | 10 | 12 | 0.40 | 0.6 | **0.5** | 4.0 | 3.0 | 20 | Tr. | Tr. | 0.20 | Tr. |

Flux chemical composition (mass%)

*Tr.: below the lower limit of analysis

Using the steel plates, the welding wires, and the fluxes, one pass of submerged arc welding was carried out under the welding conditions in Table 4 to produce submerged arc welded joints.

[Table 4]

Table 4

| Example | Steel plate No. | Wire No. | Flux No. | α | Welding conditions | | | | |
|---|---|---|---|---|---|---|---|---|---|
| | | | | | Electrode placement | Current (A) | Voltage (V) | Welding speed (cm/min) | Heat input (kJ/cm) |
| 1 | I | A | a | 0.50 | Leading | 2100 | 38 | 18 | 522 |
| | | | | | Trailing | 1600 | 48 | | |
| 2 | I | B | b | 0.43 | Leading | 2100 | 38 | 18 | 522 |
| | | | | | Trailing | 1600 | 48 | | |
| 3 | I | C | c | 0.57 | Leading | 2100 | 38 | 18 | 522 |
| | | | | | Trailing | 1600 | 48 | | |
| 4 | I | D | d | 0.48 | Leading | 2100 | 38 | 18 | 522 |
| | | | | | Trailing | 1600 | 48 | | |
| 5 | I | E | e | 0.59 | Leading | 2100 | 38 | 18 | 522 |
| | | | | | Trailing | 1600 | 48 | | |
| 6 | II | F | f | 0.57 | Leading | 2100 | 38 | 18 | 522 |
| | | | | | Trailing | 1600 | 48 | | |
| 7 | II | G | g | 0.53 | Leading | 2100 | 38 | 18 | 522 |
| | | | | | Trailing | 1600 | 48 | | |
| 8 | II | H | h | 0.50 | Leading | 2100 | 38 | 18 | 522 |
| | | | | | Trailing | 1600 | 48 | | |
| 9 | III | I | i | 0.49 | Leading | 2100 | 38 | 18 | 522 |
| | | | | | Trailing | 1600 | 48 | | |
| 10 | III | J | j | 0.42 | Leading | 2100 | 38 | 18 | 522 |
| | | | | | Trailing | 1600 | 48 | | |
| 11 | III | **K** | k | 0.51 | Leading | 2100 | 38 | 18 | 522 |
| | | | | | Trailing | 1600 | 48 | | |
| 12 | III | **L** | l | **0.74** | Leading | 2100 | 38 | 18 | 522 |
| | | | | | Trailing | 1600 | 48 | | |
| 13 | I | **M** | m | 0.49 | Leading | 2100 | 38 | 18 | 522 |
| | | | | | Trailing | 1600 | 48 | | |
| 14 | I | N | **n** | 0.54 | Leading | 2100 | 38 | 18 | 522 |
| | | | | | Trailing | 1600 | 48 | | |
| 15 | IV | A | a | 0.50 | Leading | 1800 | 36 | 26 | 301 |
| | | | | | Trailing | 1400 | 47 | | |
| 16 | V | A | a | 0.50 | Leading | 2000 | 36 | 22 | 380 |
| | | | | | Trailing | 1400 | 48 | | |

(continued)

| Example | Steel plate No. | Wire No. | Flux No. | $\alpha$ | Welding conditions | | | | |
|---|---|---|---|---|---|---|---|---|---|
| | | | | | Electrode placement | Current (A) | Voltage (V) | Welding speed (cm/min) | Heat input (kJ/cm) |
| 17 | VI | A | a | 0.50 | Leading | 2150 | 38 | 17 | 606 |
| | | | | | Trailing | 1800 | 50 | | |
| 18 | VII | A | k | 0.36 | Leading | 2150 | 38 | 17 | 606 |
| | | | | | Trailing | 1800 | 50 | | |
| 19 | I | B | l | 0.70 | Leading | 2150 | 38 | 17 | 606 |
| | | | | | Trailing | 1800 | 50 | | |

After welding, a test piece was taken from a central portion of the weld metal and subjected to elemental analysis by wet analysis.

Further, a cross-section of the welded joint was macroscopically observed with an optical microscope to determine the presence or absence of welding defects. When a welding defect was found in the welded portion, "Yes" was the evaluation for welding defect. When no welding defects were found, "No" was the evaluation for welding defect.

[Measurement of mechanical properties of weld metal]

Tensile test pieces (parallel portion diameter: 10 mm) and Charpy impact test pieces (V-notch) were taken from the obtained weld metal in accordance with the provisions of JIS Z 3111, and tensile tests and impact tests were carried out.

The tensile tests were carried out on each three test pieces at room temperature, and the average of the obtained values (0.2 % proof stress) was regarded as the tensile property of the weld metal using the corresponding wire.

Further, the Charpy impact tests were carried out on each three test pieces, and the absorbed energy ($_vE_0$) at a test temperature of 0 °C was determined, and the average value was regarded as the low-temperature impact toughness of the weld metal using the corresponding wire. The V-notch position of each Charpy impact test piece was set at the center of the weld metal, which is half the plate thickness.

The results are listed in Table 5.

[Table 5]

Table 5

| Example | Weld metal chemical composition (mass%) | | | | | | | | | | | | | | | | | | | Welding defect | Weld metal mechanical properties | | | Remarks |
|---|---|---|---|---|---|---|---|---|---|---|---|---|---|---|---|---|---|---|---|---|---|---|---|---|
| | C | Si | Mn | P | S | Ni | Cr | Mo | O | N | Cu | Al | Ti | Nb | V | Ca | REM | B | CeqD | | 0.2 % proof stress (MPa) | Tensile strength (MPa) | $_vE_0$ (J) | |
| 1 | 0.05 | 0.48 | 1.4 | 0.010 | 0.003 | 3.4 | 0.3 | 1.5 | 0.025 | 0.004 | 0.4 | 0.01 | Tr. | 0.01 | 0.03 | Tr. | Tr. | Tr. | 0.82 | No | 681 | 953 | 64 | Example |
| 2 | 0.08 | 0.79 | 1.2 | 0.009 | 0.002 | 2.6 | 0.6 | 1.0 | 0.021 | 0.004 | 0.3 | 0.03 | 0.09 | 0.01 | 0.08 | Tr. | Tr. | Tr. | 0.75 | No | 641 | 831 | 59 | Example |
| 3 | 0.04 | 0.48 | 1.5 | 0.008 | 0.003 | 1.9 | 1.8 | 0.7 | 0.023 | 0.004 | 0.2 | 0.12 | 0.09 | 0.01 | 0.03 | Tr. | Tr. | Tr. | 0.89 | No | 715 | 953 | 51 | Example |
| 4 | 0.04 | 0.34 | 2.0 | 0.009 | 0.003 | 2.7 | 0.7 | 1.1 | 0.017 | 0.004 | 0.2 | 0.07 | 0.05 | 0.01 | 0.03 | Tr. | Tr. | Tr. | 0.87 | No | 735 | 989 | 63 | Example |
| 5 | 0.05 | 0.35 | 1.0 | 0.009 | 0.003 | 3.0 | 0.7 | 1.7 | 0.027 | 0.005 | 0.2 | 0.04 | 0.04 | 0.01 | 0.03 | Tr. | Tr. | 0.008 | 0.87 | No | 708 | 962 | 58 | Example |
| 6 | 0.08 | 0.10 | 0.8 | 0.011 | 0.005 | 2.2 | 1.3 | 0.9 | 0.037 | 0.003 | 0.5 | 0.01 | 0.02 | 0.08 | 0.03 | Tr. | Tr. | Tr. | 0.76 | No | 635 | 866 | 42 | Example |
| 7 | 0.08 | 0.22 | 1.0 | 0.011 | 0.005 | 4.7 | 0.3 | 1.5 | 0.029 | 0.004 | 0.8 | 0.01 | 0.02 | 0.03 | Tr. | 0.005 | 0.009 | Tr. | 0.81 | No | 684 | 890 | 74 | Example |
| 8 | 0.07 | 0.69 | 1.9 | 0.009 | 0.010 | 3.1 | 1.2 | 0.8 | 0.016 | 0.004 | 0.4 | 0.11 | 0.10 | 0.03 | Tr. | Tr. | Tr. | 0.005 | 0.93 | No | 728 | 992 | 68 | Example |
| 9 | 0.07 | 0.23 | 0.9 | 0.012 | 0.007 | 1.7 | 1.5 | 0.7 | 0.031 | 0.005 | 0.2 | 0.08 | 0.01 | 0.01 | Tr. | 0.001 | 0.010 | 0.001 | 0.75 | No | 647 | 856 | 42 | Example |
| 10 | 0.10 | 0.37 | 2.0 | 0.011 | 0.011 | 1.8 | 1.1 | 0.5 | 0.017 | 0.008 | 0.2 | Tr. | 0.05 | 0.01 | Tr. | 0.001 | 0.020 | 0.001 | 0.84 | No | 685 | 920 | 54 | Example |
| 11 | 0.10 | 0.63 | 1.2 | 0.009 | 0.006 | 2.9 | 1.1 | 0.8 | 0.027 | 0.005 | Tr. | 0.03 | 0.04 | 0.01 | Tr. | 0.001 | 0.010 | 0.001 | 0.82 | **Yes: one-sided melting** | 665 | 919 | **Test piece could not be collected** | **Comparative Example** |
| 12 | 0.08 | 0.73 | 1.6 | 0.009 | 0.006 | 3.6 | 1.1 | 1.9 | 0.018 | 0.005 | 0.3 | 0.03 | 0.05 | 0.01 | Tr. | 0.001 | 0.010 | 0.009 | **1.16** | **Yes: crack** | **Test piece could not be collected** | **Test piece could not be collected** | **Test piece could not be collected** | **Comparative Example** |
| 13 | 0.07 | 0.62 | 1.4 | 0.009 | 0.003 | 2.3 | 0.7 | 1.1 | 0.025 | 0.004 | 0.5 | 0.04 | 0.03 | 0.01 | 0.03 | Tr. | Tr. | Tr. | 0.80 | **Yes: one-sided melting** | 660 | 911 | **Test piece could not be collected** | **Comparative Example** |
| 14 | 0.05 | 0.17 | 0.9 | 0.010 | 0.003 | **1.3** | 1.1 | 1.3 | 0.031 | 0.004 | 0.4 | 0.03 | Tr. | 0.01 | 0.03 | Tr. | Tr. | Tr. | 0.78 | No | 641 | 867 | **19** | **Comparative Example** |
| 15 | 0.06 | 0.5 | 1.5 | 0.010 | 0.003 | 3.1 | 0.3 | 1.3 | 0.033 | 0.004 | 0.4 | 0.02 | 0.01 | 0.01 | 0.03 | Tr. | Tr. | Tr. | 0.79 | No | 667 | 895 | 78 | Example |
| 16 | 0.06 | 0.51 | 1.5 | 0.011 | 0.004 | 3.2 | 0.3 | 1.4 | 0.028 | 0.004 | 0.4 | 0.02 | Tr. | 0.01 | 0.03 | Tr. | Tr. | Tr. | 0.82 | No | 666 | 951 | 71 | Example |
| 17 | 0.05 | 0.52 | 1.4 | 0.010 | 0.003 | 3.5 | 0.3 | 1.5 | 0.023 | 0.004 | 0.4 | 0.01 | Tr. | 0.01 | 0.02 | Tr. | Tr. | Tr. | 0.83 | No | 684 | 948 | 67 | Example |
| 18 | 0.08 | 0.48 | 1.2 | 0.009 | 0.004 | 2.4 | 0.6 | 1.2 | 0.021 | 0.003 | 0.3 | 0.04 | 0.04 | 0.01 | 0.02 | Tr. | Tr. | Tr. | 0.78 | No | 658 | 909 | 57 | Example |
| 19 | 0.08 | 0.43 | 1.3 | 0.009 | 0.002 | 3.6 | 0.9 | 1.9 | 0.018 | 0.004 | 0.3 | 0.04 | 0.04 | 0.01 | 0.07 | Tr. | Tr. | Tr. | 1.06 | No | 762 | 1038 | 72 | Example |

*Tr.: below the lower limit of analysis

27

No welding defects were observed in any of the Examples according to the present disclosure. Further, the yield stress (0.2 % proof stress) at room temperature was 630 MPa or more, the tensile strength was 780 MPa or more, and the absorbed energy $vE_0$ in a Charpy impact test at a test temperature of 0 °C was 27 J or more, and therefore welded joints with high strength and excellent toughness were obtained.

In contrast, according to the Comparative Examples outside the scope of the present disclosure, the desired welded joints could not be obtained due to the occurrence of welding defects or insufficient impact toughness of the weld metal.

**Claims**

1. A submerged arc welding method, the method comprising welding a 780 MPa grade steel with a welding heat input of 300 kJ/cm or more using a welding wire and a flux, wherein

    the welding wire comprises a chemical composition containing, in mass%,
    C: 0.03 % to 0.12 %,
    Si: 0.01 % to 0.60 %,
    Mn: 1.0 % to 2.0 %,
    P: 0.015 % or less,
    S: 0.015 % or less,
    Ni: 1.0 % to 4.0 %,
    Cr: 1.5 % or less,
    Mo: 0.2 % to 1.2 %,
    O: 0.015 % or less and
    N: 0.010 % or less,
    with the balance being Fe and inevitable impurity,
    wherein CeqW represented by the following Expression (1) is in a range from 0.40 to 0.80,
    the flux comprises a chemical composition containing, in mass%,
    $SiO_2$: 5 % to 30 %,
    CaO: 1 % to 10 %,
    MgO: 5 % to 30 %,
    $Al_2O_3$: 3 % to 20 %,
    $TiO_2$: 2 % to 20 %,
    $Na_2O$: 1 % to 3 %,
    $CaF_2$: 2 % to 20 %,
    one or more metal carbonates: 2 % to 12 % in total in $CO_2$ content equivalent,
    Si: 0.10 % to 2.50 %,
    Mn: 0.1 % to 2.0 %,
    Ni: 1.0 % to 12.0 %,
    Cr: 8.0 % or less,
    Mo: 1.0 % to 8.0 %, and
    Fe: 10 % to 30 %,
    wherein $\alpha$ represented by the following Expression (2) is in a range from 0.35 to 0.70,

    $$\mathrm{CeqW} = [\mathrm{C}]_W + [\mathrm{Si}]_W/24 + [\mathrm{Mn}]_W/6 + [\mathrm{Ni}]_W/40 + [\mathrm{Cr}]_W/5 + [\mathrm{Mo}]_W/4 \dots(1)$$

    $$\alpha = (0.3 - [\mathrm{Fe}]_F/200) \times \{[\mathrm{Si}]_F/24 + [\mathrm{Mn}]_F/6 + [\mathrm{Ni}]_F/40 + [\mathrm{Cr}]_F/5 + [\mathrm{Mo}]_F/4\} + 0.4 \times \mathrm{CeqW} \qquad (2)$$

    where [element]w of the wire in Expression (1) or [component]$_F$ of the flux in Expression (2) represents the content in mass% of the element or component, and is set to 0 when the element or component is not contained.

2. The submerged arc welding method according to claim 1, wherein the chemical composition of the welding wire further comprises, in mass%, at least one selected from the group consisting of:

    Cu: 1.0 % or less,

Al: 0.20 % or less,
Ti: 0.20 % or less,
Nb: 0.10 % or less,
V: 0.10 % or less,
Ca: 0.010 % or less,
B: 0.010 % or less, and
REM: 0.020 % or less.

3. The submerged arc welding method according to claim 1 or 2, wherein the chemical composition of the flux further comprises, in mass%, at least one selected from the group consisting of:

$B_2O_3$: 1.0 % or less,
$K_2O$: 3.0 % or less,
Ti: 1.00 % or less, and
Al: 1.00 % or less.

4. A method of producing a welded joint, the method comprising producing a welded joint using the submerged arc welding method according to any one of claims 1 to 3.

5. The method of producing a welded joint according to claim 4, wherein the welded joint comprises a weld metal comprising a chemical composition containing, in mass%,

C: 0.04 % to 0.10 %,
Si: 0.10 % to 0.80 %,
Mn: 0.9 % to 2.0 %,
P: 0.015 % or less,
S: 0.015 % or less,
Ni: 1.6 % to 5.0 %,
Cr: 0.3 % to 2.0 %,
Mo: 0.5 % to 2.0 %,
O: 0.040 % or less, and
N: 0.010 % or less,
with the balance being Fe and inevitable impurity,
wherein CeqD represented by the following Expression (3) is 0.75 to 0.95,

$$CeqD = [C]_D + [Si]_D/24 + [Mn]_D/6 + [Ni]_D/40 + [Cr]_D/5 + [Mo]_D/4$$
$$...(3)$$

where $[element]_D$ of the weld metal in Expression (3) represents the content in mass% of the element, and is set to 0 when the element is not contained.

6. The method of producing a welded joint according to claim 5, wherein the weld metal of the welded joint further comprises, in mass%, at least one selected from the group consisting of:

Cu: 1.0 % or less,
Al: 0.12 % or less,
Ti: 0.12 % or less,
Nb: 0.10 % or less,
V: 0.10 % or less,
Ca: 0.006 % or less, and
B: 0.010 % or less, and
REM: 0.020 % or less.

7. The method of producing a welded joint according to claim 5 or 6, wherein the weld metal of the welded joint has mechanical properties of a room temperature yield stress, 0.2 % proof stress, of 630 MPa or more, a tensile strength of 780 MPa or more, and an absorbed energy $vE_0$ of 27 J or more in a V-notch Charpy impact test at a test temperature of 0 °C.

**EP 4 640 364 A1**

<table>
<tr><td colspan="2">INTERNATIONAL SEARCH REPORT</td><td>International application No.<br><br>**PCT/JP2024/008877**</td></tr>
<tr><td colspan="3">**A. CLASSIFICATION OF SUBJECT MATTER**<br><br>**B23K 35/362**(2006.01)i; **B23K 9/18**(2006.01)i; **B23K 35/30**(2006.01)i; **C22C 38/00**(2006.01)i; **C22C 38/58**(2006.01)i; **B23K 103/04**(2006.01)n<br>FI: B23K35/362 310C; B23K35/362 310A; B23K35/30 320A; C22C38/00 301B; C22C38/58; B23K9/18 G; B23K103:04<br><br>According to International Patent Classification (IPC) or to both national classification and IPC</td></tr>
<tr><td colspan="3">**B. FIELDS SEARCHED**</td></tr>
<tr><td colspan="3">Minimum documentation searched (classification system followed by classification symbols)<br><br>B23K35/362; B23K9/18; B23K35/30; C22C38/00; C22C38/58; B23K103/04</td></tr>
<tr><td colspan="3">Documentation searched other than minimum documentation to the extent that such documents are included in the fields searched<br><br>Published examined utility model applications of Japan 1922-1996<br>Published unexamined utility model applications of Japan 1971-2024<br>Registered utility model specifications of Japan 1996-2024<br>Published registered utility model applications of Japan 1994-2024</td></tr>
<tr><td colspan="3">Electronic data base consulted during the international search (name of data base and, where practicable, search terms used)</td></tr>
</table>

**C. DOCUMENTS CONSIDERED TO BE RELEVANT**

| Category* | Citation of document, with indication, where appropriate, of the relevant passages | Relevant to claim No. |
|---|---|---|
| A | WO 2022/230615 A1 (JFE STEEL CORPORATION) 03 November 2022 (2022-11-03) | 1-7 |
| A | JP 2016-83674 A (NIPPON STEEL & SUMIKIN WELDING CO., LTD.) 19 May 2016 (2016-05-19) | 1-7 |
| A | JP 2017-523046 A (INSTITUTE OF RESEARCH OF IRON AND STEEL, JIANGSU PROVINCE/SHA-STEEL, CO., LTD.) 17 August 2017 (2017-08-17) | 1-7 |
| A | JP 2017-047472 A (KABUSHIKI KAISHA KOBE SEIKO SHO) 09 March 2017 (2017-03-09) | 1-7 |
| A | JP 2005-271045 A (NIPPON STEEL & SUMIKIN WELDING CO., LTD.) 06 October 2005 (2005-10-06) | 1-7 |
| A | JP 2007-260696 A (NIPPON STEEL & SUMIKIN WELDING CO., LTD.) 11 October 2007 (2007-10-11) | 1-7 |

☐ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **15 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

30

**INTERNATIONAL SEARCH REPORT**
Information on patent family members

International application No.

**PCT/JP2024/008877**

| Patent document cited in search report | | | Publication date (day/month/year) | Patent family member(s) | | | Publication date (day/month/year) |
|---|---|---|---|---|---|---|---|
| WO | 2022/230615 | A1 | 03 November 2022 | EP | 4296397 | A1 | |
| | | | | CN | 117177833 | A | |
| | | | | KR | 10-2023-0158567 | A | |
| JP | 2016-83674 | A | 19 May 2016 | (Family: none) | | | |
| JP | 2017-523046 | A | 17 August 2017 | US | 2017/0197273 | A1 | |
| | | | | WO | 2015/188427 | A1 | |
| | | | | EP | 3156168 | A1 | |
| | | | | CN | 104002059 | A | |
| | | | | KR | 10-2017-0015494 | A | |
| JP | 2017-047472 | A | 09 March 2017 | WO | 2017/038975 | A1 | |
| | | | | EP | 3345716 | A1 | |
| | | | | CN | 107949455 | A | |
| | | | | KR | 10-2018-0034646 | A | |
| | | | | ES | 2833354 | T3 | |
| JP | 2005-271045 | A | 06 October 2005 | (Family: none) | | | |
| JP | 2007-260696 | A | 11 October 2007 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015110241 A
- JP 2015120175 A
- JP 2004337863 A
- JP 2008240096 A